# EUROPEAN PATENT SPECIFICATION

(11) **EP 0 790 143 B1**
(45) Date of publication and mention of the grant of the patent: **12.07.2000**
(21) Application number: 97300914.5
(22) Date of filing: 13.02.1997
(51) Int. Cl.: B60C 9/22, B60C 9/20

(54) **Pneumatic radial tyre**
Radialer Luftreifen
Bandage pneumatique radial

(30) Priority: 15.02.1996 JP 2788596; 09.12.1996 JP 32865796
(43) Date of publication of application: 20.08.1997
(73) Proprietor: SUMITOMO RUBBER INDUSTRIES LIMITED, Kobe-shi, Hyogo-ken (JP)
(72) Inventor: Suzuki, Toshiaki, Ashiya-shi, Hyogo-ken (JP)
(74) Representative: Stewart, Charles Geoffrey

(56) References cited:
- EP-A- 0 335 588
- EP-A- 0 353 659
- EP-A- 0 385 639
- EP-A- 0 504 698
- DE-A- 4 209 817
- GB-A- 2 092 964
- PATENT ABSTRACTS OF JAPAN vol. 016, no. 044 (M-1207), 4 February 1992 & JP 03 248902 A (TOYO TIRE & RUBBER CO LTD), 6 November 1991,

## Description

The present invention relates to a pneumatic radial tyre having an improved belt being capable of improving high speed durability and cornering performance.

In a conventional radial tyre the tread portion of which is reinforced by a breaker belt, when the breaker belt is subjected to a large centrifugal force during high speed running, the breaker belt lifts and as a result belt edge separation failure is liable to occur. Thus the tyre durability is liable to decrease. This is particularly so when steel cords are used in the breaker.

In order to prevent lifting of a breaker belt, for example, in Japanese laid-open patent application No. 63-315305, the tyre is provided with a full-width band extending over the full width of the breaker and a pair of edge bands disposed in only the edge portions of the breaker, and each band is made of nylon cords.

In this structure, however, as the bands are made of a low elastic modulus cord, the bands do not fully control the lifting of the breaker edge portions. Thus, breaker edge looseness is still liable to occur and thus decrease high speed durability. This is a problem in case of a pneumatic tyre for high performance passenger cars such as a sport cars.

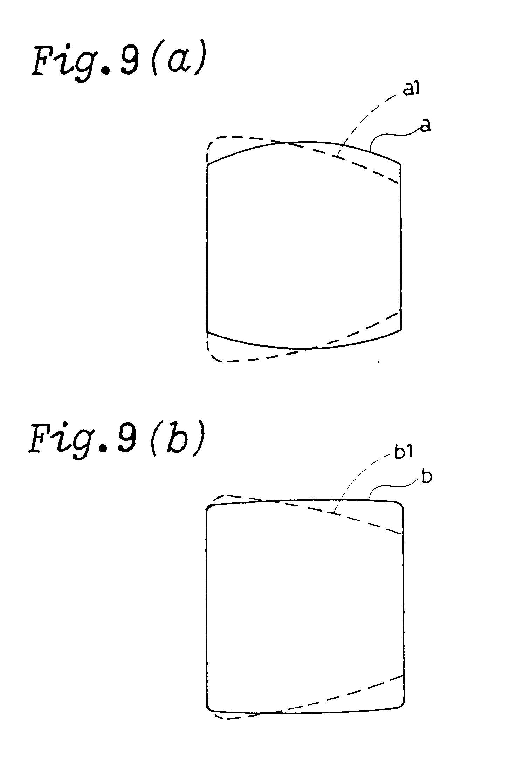

If the full-width band and edge bands are made of a high elastic modulus cord, the ground contacting area during high speed running becomes a substantially rectangular shape (b) as shown in Fig.9(b) rather than the barrel like shape (a) shown in Fig.9(a). As a result, during cornering, the rectangular shape (b) is changed to a trapezoidal shape (b1) as shown in broken lines, greatly decreasing the ground contacting area. Thus, the transitional cornering characteristics of the tyre are liable to change greatly, and slip is liable to occur during cornering.

On the other hand, a ground contacting area having the barrel like shape (a) is also changed to a trapezoidal shape (a1) at the time of cornering as shown in broken line, but the decrease in the ground contacting area is relatively small and thus the cornering performance is not deteriorated.

EP-A-0 335 588 discloses a tyre having a full width band of low modulus cords and edge bands of high modulus cords in accordance with the preamble of claim 1. This document however is silent regarding the width of the edge bands and the benefits therein.

It is therefore, an object of the present invention to provide a pneumatic radial tyre having a full-width band and edge bands which has improved high speed durability and cornering performance.

According to the present invention, pneumatic radial tyre comprising a tread portion, a pair of sidewall portions, a pair of bead portions with a bead core therein, a radial carcass ply extending between the bead portions through the tread portion and sidewall portions anc turned up around the bead cores, a breaker belt disposed radially outside the carcass and inside the tread portion and comprising at least two crossed plies of high elastic modulus cords laid at an inclination angle of from 15 to 30 degrees with respect to the tyre equator, and a band belt disposed radially outside the breaker belt and comprising a full-width band and a pair of axially spaced edge bands, the full-width band being made of low tensile elastic modulus organic fibre cords arranged substantially parallel to the tyre equator, and the edge bands being made of high modulus organic fibre cords arranged substantially parallel to the tyre equator, characterised in that the width of each of the edge bands is between 13% and 26% of the width of the ground contacting area of the tread portion.

Preferably, organic fibre cords having a tensile elastic modulus of less than 1000 kg/mm² are used for the low modulus cords. For the high modulus cords, an organic fibre cord having a tensile elastic modulus of not less than 1000 kg/mm² or a hybrid cord formed by twisting together an organic fibre strand having a tensile elastic modulus of not less than 1000 kg/mm² and an organic fibre strand having a tensile elastic modulus of less than 1000 kg/mm² is used.

Further, the edge bands are preferably disposed radially inside the full-width band.

Taking a pneumatic radial tyre for passenger cars as an example, an embodiment of the present invention, by way of example only, will now be described in detail in conjunction with the accompanying drawings, in which:
Fig.1 is a cross sectional view of an embodiment of the present invention;

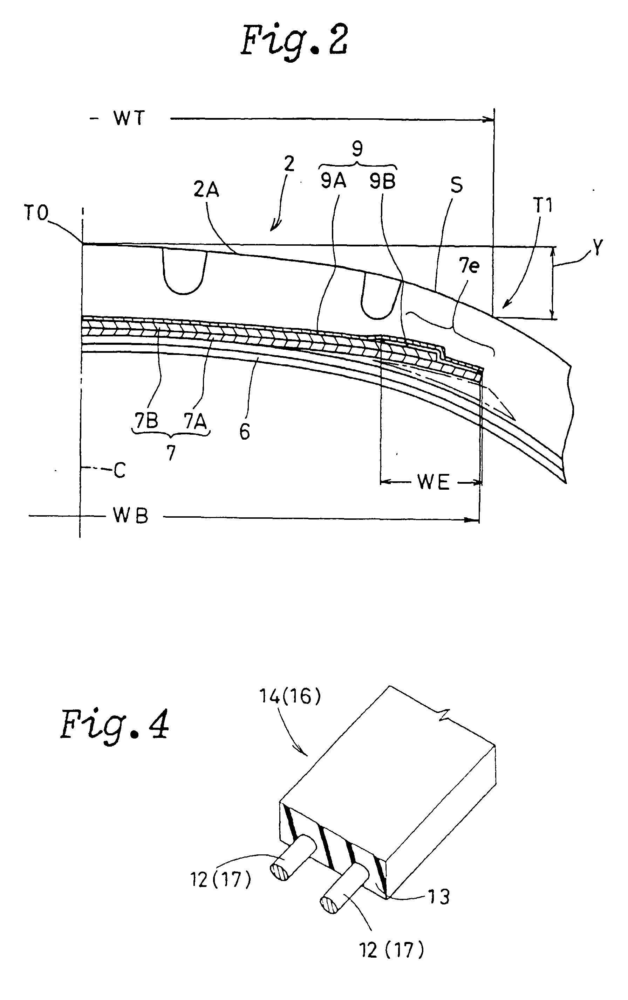

Fig.2 is an enlarged cross sectional view showing the tread part thereof;

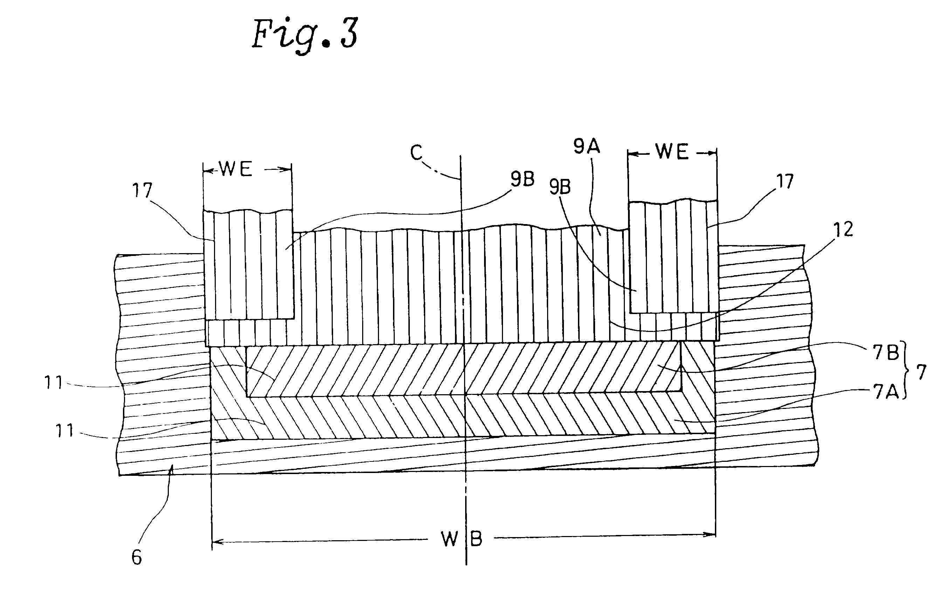

Fig.3 is a developed plan view showing the breaker and bands;
Fig.4 is a perspective view showing an example of a ribbon of rubber;
Fig.5 is a graph showing an example of the load-elongation curve of a hybrid cord and that of a high modulus fibre cord;
Fig.6 is a schematic cross sectional view showing another example of the band;
Fig.7 is a schematic cross sectional view showing a band structure used in a test tyre;
Fig.8 is a diagram showing relationships between a relative camber quantity and various running performances;
Fig.9(a) is a diagram showing the ground contacting area of the tyre according to the present invention; and
Fig.9(b) is a diagram showing a ground contacting area of a prior art tyre.

In the drawings, the pneumatic radial tyre 1 according to the present invention comprises a tread portion 2, a pair of sidewall portions 3, a pair of bead portions 4 with a bead core 5 therein, a carcass 6 extending between the bead portions 4 through the tread portion 2 and sidewall portions 3 and turned up around the bead cores 5 from the axially inside to the outside of the tyre to form a pair of turnup portions 6b and a main portion 6a therebetween, a breaker belt 7 disposed radially outside the carcass 6 and inside the tread portion 2, and a band belt 9 disposed radially outside the breaker belt 7.

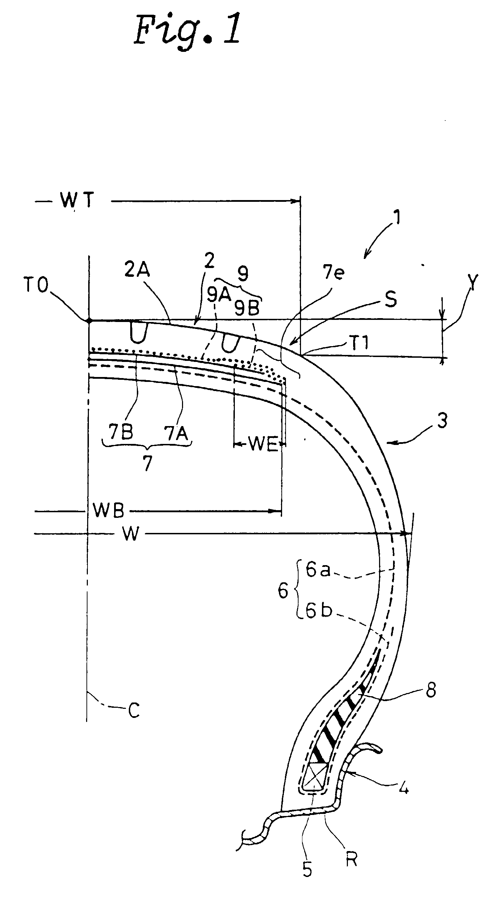

The tyre shown in Fig.1 is in a normal unloaded state in which the tyre is mounted on a standard rim R and inflated to a maximum pressure, but loaded with no load, wherein the standard rim R is the rim officially approved for the tyre by, for example JATMA (Japan), TRA (USA), ETRTO (Europe) and the like, and the maximum pressure is that specified by the same association.

In a meridian section of the tyre, the profile line of the tread portion 2 is curved concavely so that the camber quantity Y is in a range of 4.0 to 5.0 % of the section width W of the tyre or 5.0 to 6.5 % of the ground contacting width WT.

If the camber quantity Y is less than 4.0% of the section width W and less than 5.0% of the ground contacting width WT, the ground pressure increases in the tread shoulder region S and heat generation is increased. As a result, the high speed durability is decreased, and running noise from the tyre increases. On the other hand, if the camber quantity Y is more than 5.0% of the section width W and more than 6.5% of the ground contacting width WT, the high speed straight running stability and high speed durability are increased, but the slow speed running steering stability decreases.

Here, the camber quantity Y is the radial distance between the tyre equator T0 and tread edge T1.

The tread edge T1 is the axially outermost edge T1 of the ground contacting area under a standard loaded state in which the tyre is mounted on the standard rig R and inflated to maximum pressure and loaded with maximum load.

For convenience' sake, the nominal tyre width in a tyre size designation in metric such as 225/65R16 specified Ln for example Japanese industrial standard JIS-D4201 may be used instead of the actual tyre section width W.

The above-mentioned carcass 6 comprises one or more plies, in this embodiment, only one ply of cords arranged radially at an angle of from 90 to 75 degrees with respect to the tyre equator C.

For the carcass cords, organic fibre cords, e.g. polyester, nylon, rayon, aromatic polyamide or the like can be used.

Preferably, at least one carcass ply is formed in a high-turnup structure such that the turnup portions 6b are higher than a bead apex 8.

The bead apex 8 is disposed between the main portion 6a and each turnup portion 6b of the carcass 6 and made of hard rubber tapering radially outwardly from the bead core 5.

The breaker belt 7 comprises two or more plies, in this embodiment consists of two crossed plies, a radially inner ply 7A disposed on the carcass 6 and a radially outer ply 7B disposed radially outside the inner ply 7A.

Each of the breaker plies 7A and 7B is composed of high elastic modulus cords 11 laid at an angle of from 15 to 30 degrees with respect to the tyre equator C in parallel with each other but crosswise to the cords of the next ply. For the breaker cords 11, to improve the steering stability, steel cords are preferably used, but inextensible organic fibre cords such as aromatic polyamide cords can be used. Both the inner and outer breaker plies 7A and 7B are of the so called cut-edge ply type, namely, the axial edge is not folded. The axial width WB of the inner breaker ply 7A is set in the range of from 0.8 to 1.1 times the ground contacting width WT. The outer breaker ply 7B is narrower in width than the inner breaker ply 7A in order to avoid stress concentration by coincident edges.

If the inclination angle of the breaker cords 11 is more than 30 degrees, the steering stability at a slow running speed is improved. However, the rigidity of the tread portion 2 decreases to decrease the high speed straight running stability and high speed durability, and further noise increases. If the angle is less than 15 degrees, the rigidity of the tread portion 2 excessively increases, and the steering stability at a slow running speed is decreased.

The above-mentioned band belt 9 comprises a full-width band 9A extending over the substantially the full width of the breaker 7, and a pair of edge bands 9B axially spaced from each other to extend only in the edge portions 7e of the breaker 7. The edge bands in this example are disposed between the breaker 7 and the full-width band 9A.

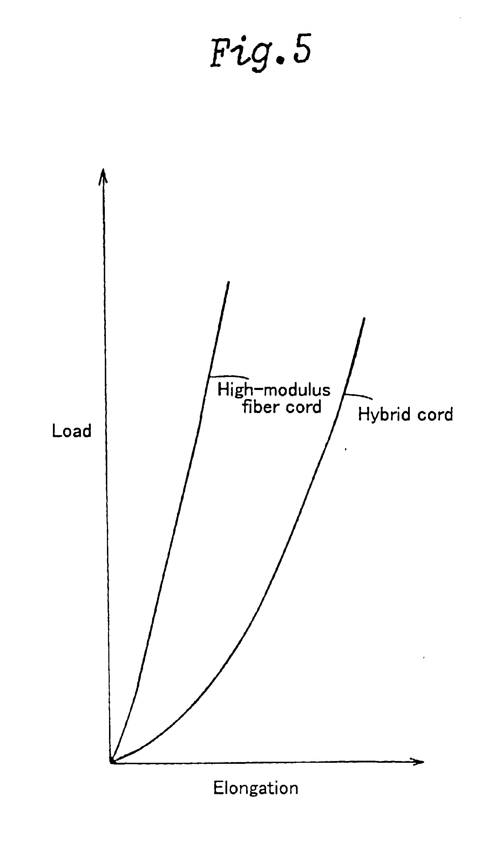

The full-width band 9A is formed by spirally winding a ribbon 14 of rubber 13 in which low modulus organic fibre cords 12 are embedded parallel to each other as shown in Fig.4 so that each cord 12 forms substantially zero angle to the tyre equator C.

The edge bands 9B are formed by spirally winding a ribbon 16 of rubber 13 in which high modulus organic fibre cords 17 are embedded in parallel with each other so that each cord forms substantially zero angle with respect to the tyre equator C.

Each of the edge bands 93 covers the edge portion 7e of the breaker 7, that is, both the edge of the outer breaker ply 7B and the edge of the inner breaker ply 7A protruding axially outwardly therefrom.

The width WE of each edge band 9B is set to be within at least one of the following ranges:
(a) 10 to 20 % of the section width W of the tyre and
(b) 13 to 26 % of the ground contacting width WT.

The edges of the full-width band 9A and the axially outer edges of the edge bands 9B are substantially aligned with the edges of the inner breaker ply 7A so that the distance of each of the band edges measured axially outwardly from the edge of the inner breaker ply 7A is in the range of from 0 to 3 mm.

For the low modulus cords 12, organic fibre cords, e.g. nylon, rayon, polyester or the like having a tensile elastic modulus of less than 1000 kg/mm² can be used. Preferably, a nylon fibre cord which is superior in bending resistance and processability is used.

For the high modulus cords 17, organic fibre cords, e.g. vinylon, aromatic polyamide or the like having a tensile elastic modulus of not less than 1000 kg/mm² can be used. Preferably, an aromatic polyamide fibre cord which is superior in strength and has a high elastic modulus is used.

Further, for the high modulus cords 17, a hybrid cord can be used, which is formed by twisting together a high modulus organic fibre strand and a low modulus organic fibre strand. The high modulus organic fibre strand has a tensile elastic modulus of not less than 1000 kg/mm² For example, an aromatic polyamide fibre strand is used. The low modulus organic fibre strand has a tensile elastic modulus of less than 1000 kg/mm². For example, a nylon fibre strand is used.

In the present invention, the tensile elastic modulus is determined based on the initial slope of the load-elongation curve of the cord or strand concerned. First, a straight line, which is inclined as the same angle as the load-elongation curve measured at the starting point, is drawn from the starting point. Then, using this straight line, the load L corresponding to an elongation of 10% is obtained. Further, using the following equation (1), the tensile elastic modulus is calculated. Tensile elastic modulus = (L X 10)/So wherein So is the cross section area of the cord or strand.

For instance, the tensile elastic modulus and other physical characteristics of various cords are as follows.

**TABLE 1**

| | unit | steel | rayon | polyester | vinlyon | aramid | 66nylon |
|---|---|---|---|---|---|---|---|
| Tensile elastic modulus | kg/mm² | 16680 | 829 | 800 | 1235 | 4500 | 200 |
| Tensile strength | kg/mm² | 275 | 60 | 74 | 72 | 218 | 70 |
| Elongation when broken | % | 2 | 13 | 10 | 10 | 6 | - |
| Strength par denier | g/D | 3.9 | 4.4 | 6.0 | 6.0 | 16.9 | 5.6 |
| Specific gravity | | 7.86 | 1.52 | 1.38 | 1.28 | 1.44 | 1.14 |

As explained above, as the edge bands 9B are made of high elastics modulus cords 17, lifting-up of the breaker edges 7e at high speed can be effectively controlled to prevent breaker edge looseness and the like.

In the tread central region between the edge bands 9B, only the full-width band 9A made of the low modulus cords 12 exists as the bandage. Therefore, lifting-up during high speed running becomes relatively large in the tread central region compared to the tread shoulder regions S, and as a result, the ground pressure decreases in the tread shoulder regions S to reduce the generation of heat. Thus, the high speed durability of the tread shoulder region S is further improved.

Further, as the swelling of the tread portion is relatively large in the central region, the ground contacting area becomes a barrel like shape (a) as shown in Fig.9(a) and a decrease in the ground contacting area at the time of cornering is controlled. Therefore, accidental slip during cornering and changes in transitional cornering characteristics can be prevented, and a good cornering performance can be obtained.

If the ply width WE of the edge bands 9B is less than 10% of the section width W of the tyre and less than 13% of the ground contacting width WT, the lifting-up of the breaker edge portions 7e during high speed running over 200km/h can not be fully controlled, and thus the high speed durability decreases. On the other hand, if the width WE is more than 20 % of the section width W or 26% of the ground contacting width WT, the high speed straight running performance decreases.

During vulcanising the tyre, the breaker cords 11 are pressed to the band cord 17. Therefore, when the high modulus cord 17 is used in the band 9, the space between the cords 11 and 17 in the vulcanised tyre decreases, and as a result, the sharing force between the cords 11 and 17 which causes ply separation failure is liable to increase. In this respect, it is preferable to use a hybrid cord as the high modulus cord 17. In the hybrid cord, the twist numbers of the strands are adjusted such that, in the initial stage of elongation, the load is mainly imposed on the low modulus strand to display a lower modulus, but in the middle and final stage the load is shared with the high modulus strand to display a high modulus as shown in Fig.5. As a result, the decrease in the space between the cords 11 and 17 caused during vulcanising the tyre is prevented.

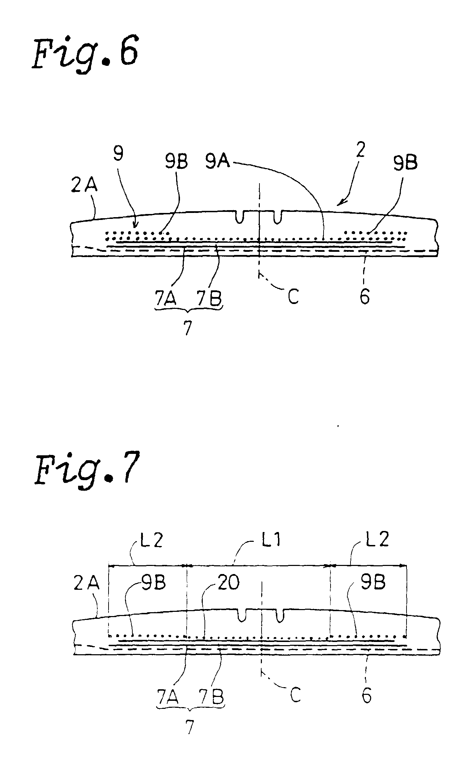

Fig.6 shows a modification of the band 9, in which the edge bands 9B are disposed radially outside the full-width band 9A.

Preferably, the bands 9A and 9B are each formed by winding at least one continuous cord 12, 17 from one of the edges to the other in view of the uniformity and high speed durability. However, it is possible to use a cut-end ply, that is, a tyre fabric in which cords are laid substantially parallel to the tyre equator C.

### Comparison tests

Test tyres of size 225/50R16 having the same structure shown in Fig.1 except for the band structure were made by way of test and tested for the following performances.

The tyre specifications and the test results are shown in Table 2.

The bands used in Ref. 3 tyre is shown in Fig.7, in which a narrow-width band 20 which is made of the low modulus cord 12 and extends from one of the axially inner edges of the edge bands 9B to the other is disposed instead of the full-width band.

### (1) High speed cornering performance test

In a tyre test course, a 3000cc passenger car provided on all four wheels with test tyres was run at a speed of 80 to 150 km/h, and the transitional cornering characteristics at a high running speed and the manceuvrability during critical running were evaluated into five ranks by the driver's feelings based on the assumption that Ref.1 is 3 and the larger value is better. The rim size was 16X6JJ and the tyre pressure was 3.0 kg/cm².

### (2) High speed durability test

Using a 1.7 metre dia. tyre test drum, the test tyre mounted on a 16X6JJ standard rim and inflated to 3.0 kg/cm² was rotated at an initial speed of 200 km/h, and the running speed was increased to 240km/h in steps of 10 km/h / 10 minutes. From 240 km/h to 280km/h, the speed was increased by steps of 10 km/h / 20 minutes. The speed at which the tyre failed and the time at the speed concerned to failure were measured.

From the above tests, it was confirmed that, in comparison with the reference tyres, the example tyres were greatly improved in high speed durability and high speed cornering performance.

In the band shown in Fig.6, however, a separation failure is liable to occur between the tread rubber and the high modulus cord edge bands 9B in comparison with the band shown in Fig.1. Thus, the edge bands 9B are preferably disposed between the breaker 7 and the full-width band 9A, whereby the ends of the ribbon 17 are covered under the low modulus full-width band 9A. Accordingly, the sharing force of the tread rubber is decreased to improve the durability.

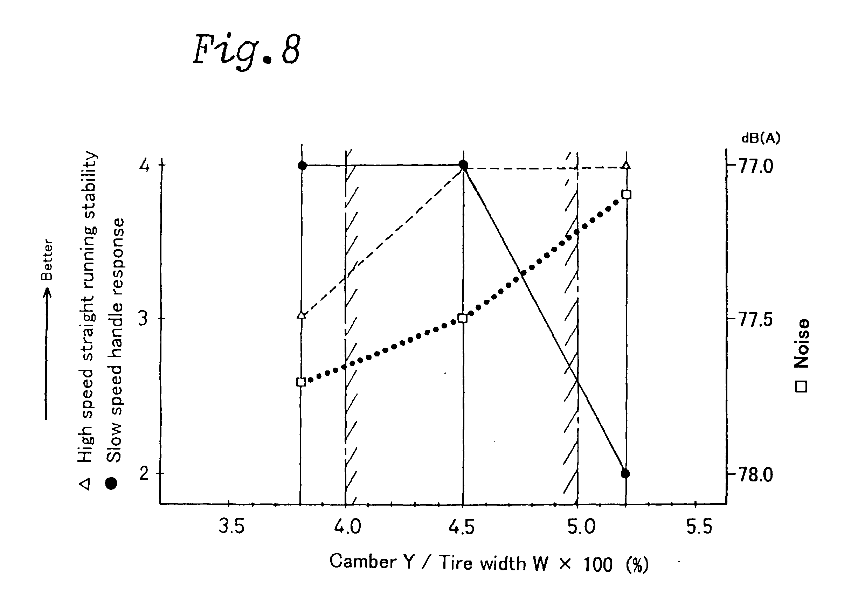

Fig.8 shows the results of a slow speed handling response test, high speed straight running stability test and noise test, as a function of the camber quantity Y. The test tyres had the same specifications as Ex.1 tyre in Table 2 except for the camber quantity Y.

### (3) Slow running speed handling response test

Test tyres having the same specifications as of the Ex.1 tyre in Table 2 except for the camber quantity Y were used.

A 3000cc passenger car which was provided on all four wheels with the test tyres mounted on the standard rim of the above-mentioned size and inflated to the above-mentioned pressure was run on a test course at a speed of 0 to 80 km/h, and the handling response was evaluated into five ranks by the driver's feelings, in which the larger value is better.

### (4) High speed straight running stability test

The test car used in the above-mentioned test (3) was run in a straight test course at a speed of 80 to 150 km/h, and the straight running stability was evaluated into five ranks by the driver's feelings, in which the larger value is better.

### (5) Noise test

The test car used in the above-mentioned test (3) was coasted on a dry asphalt road at a speed of 52.5 km/h, and the overall passing noise was measured with a microphone set at a height of 1.2 meters and 7.5 meter sideways from the centre line of the course.

From the tests (3)-(5), it was confirmed that, by setting the camber Y in the range of from 4.0 to 5.0% of the tyre width W, the slow speed handling response, high speed straight running stability and noise were improved in a well balanced manner.

As described above, as the pneumatic radial tyre of the present invention is provided radially outside the breaker belt with the band which comprises a full-width band made of a low modulus organic fibre cord and edge bands made of a high modulus organic fibre cord, whereby the high speed durability and cornering performance can be improved.

**TABLE 2**

| Tyre | Ref.1 | Ref.2 | Ex.1 | Ex.2 | Ex.3 | Ref.3 |
|---|---|---|---|---|---|---|
| Band structure | Fig.2 | Fig.2 | Fig.2 | Fig.2 | Fig.6 | Fig.7 |
| Full width band Width (mm) | 200 | 200 | 200 | 200 | 200 | L1=150 |
| Cord material | nylon | nylon | nylon | nylon | nylon | nylon |
| Edge band Width WE (mm) | 25 | 25 | 25 | 25 | 25 | L2=25 |
| Cord material | nylon | aramid | aramid | hybrid aramid 1000d & nylon 840d | aramid | aramid |
| Test results | | | | | | |
| High speed durability | 3 | 2 | 3 | 3 | 3 | 3 |
| High speed cornering | 250km/h 15 min *1 | OK *2 | OK *3 | OK *4 | 280km/h 5 min *5 | 250km/h 15 min *5 |
| Camber quantity Y : 4.5 mm | | | | | | |
| Ground contacting width WT : 176 mm | | | | | | |
| Carcass : a single ply of 1670d/2 polyester cords | | | | | | |
| Cord angle : 90 degrees to tyre equator | | | | | | |
| Breaker: two cross plies of 1X3/0.27 steel cords | | | | | | |
| Cord angle : +24 & -24 degrees to tyre equator | | | | | | |
| Inner ply width : 200 mm (= WB) | | | | | | |
| Outer ply width : 197 mm | | | | | | |
| | | | | | | |
| Tyre size : 225/50R16 | | | | | | |
| Section width W: 225 mm | | | | | | |

| | | | | | | |
|---|---|---|---|---|---|---|
| OK : The tyre ran completely at 280 km/h for 20 minutes. | | | | | | |
| *1 : A breaker edge looseness extending to the radially inside of the edge bands occurred and the tread was bulged out. | | | | | | |
| *2: Upon cut open inspection, a breaker edge looseness of max. 4 mm extending to the radially inside of the edge bands was found. | | | | | | |
| *3: Upon cut open inspection, a breaker edge looseness of max. 3 mm extending to the radially inside of the edge bands was found. | | | | | | |
| *4: No damage was found upon cut open inspection. | | | | | | |
| *5: A breaker edge looseness extending to the radially outer surface of the edge bands occurred and the tread was bulged out. | | | | | | |

## Claims

1. A pneumatic radial tyre comprising a tread portion (2), a pair of sidewall portions (3), a pair of bead portions (4) with a bead core (5) therein, a radial carcass ply (6) extending between the bead portions (4 through the tread portion (2) and sidewall portions (3) and turned up around the bead cores (5), a breaker belt (7) disposed radially outside the carcass (6) and inside the tread portion (2) and comprising at least two crossed plies (7A,7B) of high elastic modulus cords laid at an inclination angle of from 15 to 30 degrees with respect to the tyre equator (C), and a band belt (9) disposed radially outside the breaker belt (7) and comprising a full-width band (9A) and a pair of axially spaced edge bands (9B), the full-width band (9A) being made of low tensile elastic modulus organic fibre cords (12) arranged substantially parallel to the tyre equator, and the edge bands (9B) being made of high modulus organic fibre cords (17) arranged substantially parallel to the tyre equator, characterised in that the width (WE) of each of the edge bands (9B) is between 13% and 26% of the width (WT) of the ground contacting area of the tread portion (2).

2. A pneumatic radial tyre according to claim 1, characterised in that the low elastic modulus organic fibre cord (12) has a tensile elastic modulus of less than 1000 kg/mm², and the high modulus organic fibre cord (17) has a tensile elastic modulus of not less than 1000 kg/mm².

3. A pneumatic radial tyre according to claim 1, characterised in that the low elastic modulus organic fibre cord (12) has a tensile elastic modulus of less than 1000 kg/mm², and the high modulus organic fibre cord (17) comprises an organic fibre strand having a tensile elastic modulus of not less than 1000 kg/mm² and an organic fibre strand having a tensile elastic modulus of less than 1000 kg/mm² which are twisted together.

4. A pneumatic radial tyre according to claim 1, 2 or 3, characterised in that the edge bands (9B) are disposed radially inside the full-width band (9A).

5. A pneumatic radial tyre according to any one of claims 1 to 4, characterised in that the profile line of the tread portion (2) is curved concavely so that the camber quantity (Y) is in a range of 4.0 to 5.0% of the section width (W) of the tyre, wherein the camber quantity (Y) is the radial distance between the tyre equator (T0) and tread edge (T1).

6. A pneumatic radial tyre according to any one of claims 1 to 5, characterised in that the profile line of the tread portion (2) is curved concavely so that the camber quantity (Y) is in a range of 5.0 to 6.5% of the ground contacting width (WT) of the tyre.

## Patentansprüche

1. Radialluftreifen mit einem Laufflächenabschnitt (2), zwei Seitenwandabschnitten (3), zwei Wulstabschnitten (4) mit einem Wulstkern (5) darin, einer radialen Karkaßlage (6), die sich zwischen den Wulstabschnitten (4) durch den Laufflächenabschnitt (2) und die Seitenwandabschnitte (3) hindurch erstreckt und um die Wulstkerne (5) umgeschlagen ist, einem Breakergürtel (7), der radial außer-halb der Karkasse (6) und innerhalb des Laufflächenabschnitts (2) angeordnet ist und mindestens zwei gekreuzte Lagen (7A, 7B) aus Corden mit hohem Elastizitätsmodul umfaßt, die unter einem Neigungswinkel von 15 bis 30 Grad in bezug auf den Reifenäquator (C) gelegt sind, und einem Bandgürtel (9), der radial außerhalb des Breakergürtels (7) angeordnet ist und ein Vollbreitenband (9A) und zwei axial beabstandete Kantenbänder (9B) umfaßt, wobei das Vollbreitenband (9A) aus organischen Fasercorden mit niedrigem Zugelastizitätsmodul (12) hergestellt ist, die im wesentlichen parallel zum Reifenäquator angeordnet sind, und die Kantenbänder (9B) aus organischen Fasercorden mit hohem Modul (17) hergestellt sind, die im wesentlichen parallel zum Reifenäquator angeordnet sind, dadurch gekennzeichnet, daß die Breite (WE) von jedem der Kantenbänder (9B) zwischen 13% und 26% der Breite (WT) der Aufstandsfläche des Laufflächenabschnitts (2) beträgt.

2. Luftreifen nach Anspruch 1, dadurch gekennzeichnet, daß der organische Fasercord mit niedrigem Elastizitätsmodul (12) einen Zugelastizitätsmodul von weniger als 1000 kg/mm² aufweist, und der organische Fasercord mit hohem Modul (17) einen Zugelastizitätsmodul von nicht weniger als 1000 kg/mm² aufweist.

3. Radialluftreifen nach Anspruch 1, dadurch gekennzeichnet, daß der organische Fasercord mit niedrigem Elastizitätsmodul (12) einen Zugelastizitätsmodul von weniger als 1000 kg/mm² aufweist, und der organische Fasercord mit hohem Modul (17) einen organischen Faserstrang mit einem Zugelastizitätsmodul von nicht weniger als 1000 kg/mm² und einen organischen Faserstrang mit einem Zugelastizitätsmodul von weniger als 1000 kg/mm² aufweist, die miteinander verdreht sind.

4. Radialluftreifen nach Anspruch 1, 2 oder 3, dadurch gekennzeichnet, daß die Kantenbänder (9B) radial innerhalb des Vollbreitenbandes (9A) angeordnet sind.

5. Radialluftreifen nach einem der Ansprüche 1 bis 4, dadurch gekennzeichnet, daß die Profillinie des Laufflächenabschnitts (2) konkav gekrümmt ist, so daß die Sturzgröße (Y) in einem Bereich von 4,0 bis 5,0% der Querschnittsbreite (W) des Reifens liegt, wobei die Sturzgröße (Y) der radiale Abstand zwischen dem Reifenäquator (T0) und der Laufflächenkante (T1) ist.

6. Radialluftreifen nach einem der Ansprüche 1 bis 5, dadurch gekennzeichnet, daß die Profillinie des Laufflächenabschnitts (2) konkav gekrümmt ist, so daß die Sturzgröße (Y) in einem Bereich von 5,0 bis 6,5% der Aufstandsbreite (WT) des Reifens liegt.

## Revendications

1. Pneumatique à carcasse radiale comprenant une partie (2) de bande de roulement, deux parties de flanc (3), deux parties de talon (4) ayant une tringle (5) à l'intérieur, une nappe radiale (6) de carcasse s'étendant entre les parties de talon (4) par l'intermédiaire de la partie de bande de roulement (2) et des parties de flanc (3) et repliée autour des tringles (5), une ceinture (7) de nappe sommet placée radialement à l'extérieur de la carcasse (6) et à l'intérieur de la partie de bande de roulement (2) et comprenant au moins deux nappes croisées (7A, 7B) de câblés de module élevé d'élasticité disposés avec un angle d'inclinaison compris entre 15 et 30° par rapport à l'équateur du pneumatique (C), et une ceinture (9) de bande disposée radialement à l'extérieur de la ceinture (7) de nappe sommet et comprenant une bande (9A) sur toute la largeur et deux bandes de bord (9B) qui sont axialement espacées, la bande (9A) placée sur toute la largeur étant formée de câblés (12) de fibres organiques de faible module d'élasticité en tension placés pratiquement parallèlement à l'équateur du pneumatique, et les bandes de bord (9B) étant formées de câblés (17) de fibres organiques de module élevé disposés en direction sensiblement parallèle à l'équateur du pneumatique, caractérisé en ce que la largeur (WE) de chacune des bandes de bord (9B) est comprise entre 13 et 26 % de la largeur (WT) de la surface de contact avec le sol de la partie de bande de roulement (2).

2. Pneumatique à carcasse radiale selon la revendication 1, caractérisé en ce que le câblé (12) de fibres organiques à faible module d'élasticité a un module d'élasticité en tension inférieur à 10¹⁰ N/m² (1 000 kg/mm²), et le câblé (17) de fibres organiques de module élevé a un module d'élasticité en tension qui n'est pas inférieur à 10¹⁰ N/m² (1 000 kg/mm²).

3. Pneumatique à carcasse radiale selon la revendication 1, caractérisé en ce que le câblé (12) de fibres organiques de faible module d'élasticité a un module d'élasticité en tension inférieur à 10¹⁰ N/m² (1 000 kg/mm²), et le câblé (17) de fibres organiques de module élevé comprend un brin de fibres organiques ayant un module d'élasticité en tension qui n'est pas inférieur à 10¹⁰ N/m² (1 000 kg/mm²) et un brin de fibres organiques ayant un module d'élasticité en tension inférieur à 10¹⁰ N/m² (1 000 kg/mm²) qui sont retordus ensemble.

4. Pneumatique à carcasse radiale selon la revendication 1, 2 ou 3, caractérisé en ce que les bandes de bord (9B) sont disposées radialement à l'intérieur de la bande (9A) placée sur toute la largeur.

5. Pneumatique à carcasse radiale selon l'une quelconque des revendications 1 à 4, caractérisé en ce que la courbe de profil de la partie de bande de roulement (2) a une courbure concave si bien que l'amplitude de cambrure (Y) est comprise entre 4,0 et 5,0 % de la largeur en coupe (W) du pneumatique, l'amplitude de cambrure (Y) étant la distance radiale comprise entre l'équateur du pneumatique (T0) et le bord de la bande de roulement (T1).

6. Pneumatique à carcasse radiale selon l'une quelconque des revendications 1 à 5, caractérisé en ce que la courbe de profil de la partie de bande de roulement (2) a une courbure concave si bien que l'amplitude de cambrure (Y) est comprise entre 5,0 et 6,5 % de la largeur (WT) de contact avec le sol du pneumatique.
